# EUROPEAN PATENT SPECIFICATION

(11) **EP 0 796 163 B1**
(45) Date of publication and mention of the grant of the patent: **14.07.1999**
(21) Application number: 95938665.7
(22) Date of filing: 07.12.1995
(51) Int. Cl.: B23F 21/16, B24B 3/12

(54) **METHOD FOR MANUFACTURING A HOB CUTTER FOR MACHINING FACE GEARS**
VERFAHREN ZUR HERSTELLUNG EINES WÄLZFRÄSERS ZUR BEARBEITUNG VON KRONENRÄDERN
PROCEDE DE FABRICATION D'UNE FRAISE-MERE SERVANT A LA TAILLE DE ROUES D'ENGRENAGE.

(30) Priority: 07.12.1994 NL 9402055
(43) Date of publication of application: 24.09.1997
(73) Proprietor: CROWN GEAR B.V., 7544 RG Enschede (NL)
(72) Inventor: BASSTEIN, Augustinus, Franciscus, Herman, NL-7491 KD Delden (NL)
(74) Representative: Iemenschot, Johannes Andreas, Ir.
(86) International application number: NL9500413
(87) International publication number: WO9617708

(56) References cited:
- WO-A-91/04819
- WO-A-92/09395
- WO-A-94/17945
- DE-A- 2 826 911
- DE-A- 2 827 145
- DE-C- 744 724
- GB-A- 105 538
- NL-A- 8 901 745

## Description

The invention relates to a method according to the preamble of claim 1.

Such a method is known from EP-A-0 559 798. With this known method the clearance faces are ground by an abrasive wheel, which moves over the surface of the teeth of a hob teeth group and machines the clearance faces point by point. This machining method takes a long time and requires expensive special tooling machines for making the required complicated movements of the abrasive wheel. These tooling machines are of limited availability, as a result of which the machining of the hob cutters is expensive and the delivery times are long.

The object of the invention is to provide a method for machining the clearance faces of a hob cutter which can be performed with simple machines.

According to the invention this object is achieved with a method according to claim 1.

By machining the clearance faces of hob teeth group of the hob cutter in this way, a simple tooling machine can be used and the machining times are relatively short.

In accordance with an improvement of the invention during machining of a hob teeth group the cutter body is rotated around its axis of rotation. In this way a clearance face which intersects a helical cutting face can be made in a simple manner.

The invention will now be explained in the example of embodiment below by reference to a drawing.
Figure 1 shows a side view of a hob cutter for machining face gears according to the invention, provided with hob teeth groups whose clearance faces are formed by straight generatrices which run parallel to one another.
Figure 2 shows a hob cutter according to Figure 1 viewed in the direction of arrow II.
Figure 3 shows a view of the centre hob teeth group shown of the hob cutter of Figures 1 and 2 in the direction of the arrow A.
Figure 4 shows a view in accordance with Figure 3 of an undesirable embodiment.
Figure 5 shows a graph in which the maximum permissible number of hob teeth groups is shown as a function of the cutter diameter and the clearance angle.
Figure 6 shows the machining of the clearance face of the hob teeth group of the hob cutter of Figure 1 by means of wire spark erosion.
Figure 7 shows the machining of the clearance face of the hob teeth group of the hob cutter of Figure 1 by means of grinding.
Figure 8 shows the machining of the clearance face of the hob teeth group of a hob cutter comparable with that of Figure 1 by means of an abrasive wheel having large diameter.
Figure 9 shows a view, corresponding to Figure 2, of a hob cutter according to the invention, having a cutting face which is a flat surface and which makes an angle with the axis of rotation of the hob cutter.
Figure 10 shows a view, corresponding to Figure 2, of a hob cutter according to the invention, having a helical cutting face.
Figure 11 shows a view along the line XI-XI in Figure 9 or 10.

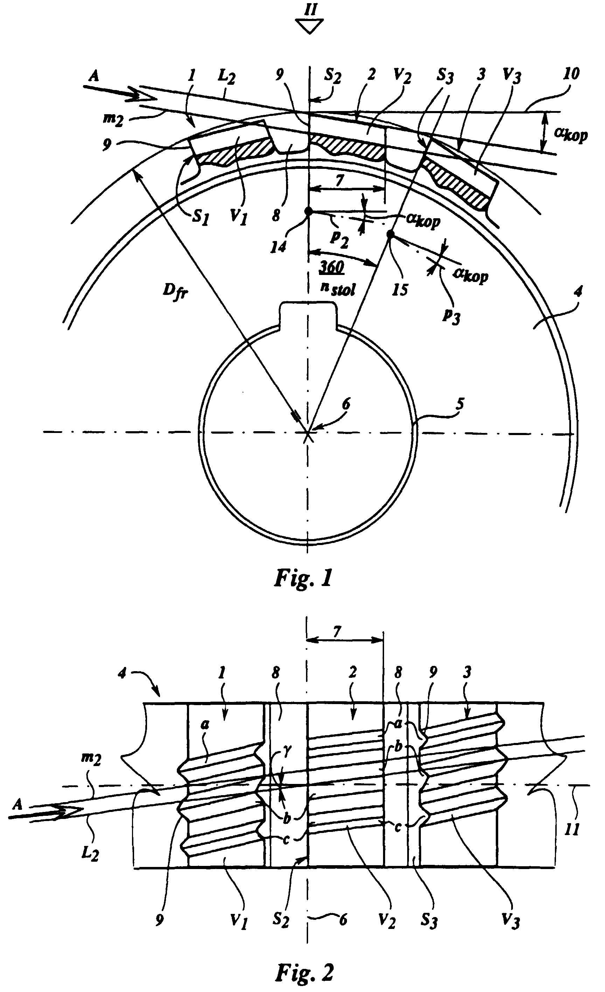

Figures 1 and 2 show a hob cutter 4 with which face gears can be machined. Said hob cutter 4 comprises a disc-like body which is provided with a number nₛₜₒₗ of hob teeth groups which are distributed uniformly over the circumference of the cutter. Figures 1 and 2 show the hob teeth groups 1, 2 and 3. Each hob teeth group is provided with a cutting face S and a clearance face V, the line of intersection of the cutting face S and the clearance face V forming a cutting edge 9 whose shape corresponds to a desired profile which will be described below in still greater detail and which determines the shape of the workpiece machined by the hob cutter 4. Since the number of hob teeth groups is nₛₜₒₗ, the angle between the consecutive cutting faces S is 360°/nₛₜₒₗ.

The hob cutter 4 has an external diameter D_{fr}, a bore 5 and an axis of rotation 6, which is also the centre line of the bore 5. The hob teeth groups having a teeth group length 7 are separated by a gash 8 whose direction corresponds to the direction of the axis of rotation 6 of the hob cutter 4. The teeth group length 7 is limited as a result of the fact that it is necessary to prevent the rear of the hob teeth group coming into contact with the workpiece during the machining.

The clearance face V of each hob teeth group is formed by a set of parallel generatrices. All these lines run in a direction A, a first line L forming, for example, the highest point and a second line m forming the lowest point of the clearance face V.

A machining plane which is not shown in the drawing and in which both a generatrix, intersecting the cutting edge 9, of the clearance face V and a line which is perpendicular to the axis of rotation 6 and which intersects the generatrix at the position of the cutting edge are situated makes a lead angle γ with a second plane or central plane 11 which is perpendicular to the axis of rotation 6 and passes through the centre of the tool. In the machining plane, the generatrix situated in said plane makes, at the position of the cutting edge 9, a clearance angle αₖₒₚ with a line 10 which is directed towards a downstream hob teeth group and which is perpendicular to a radius vector running from the cutting edge 9 to the axis of rotation 6 of the hob cutter 4.

The profile of the cutting edge 9 is shaped in a known manner in such a way that the hob cutter 4 can be used to manufacture face gears which are able to interact with cylindrical pinions, which may be provided with straight or helical toothing.

The profile of each cutting edge 9 is derived from the cylindrical pinion which determines the shape of the face gear, the profile being adjusted with necessary corrections, for example for the case where the radius vector to the axis of rotation 6 is not situated in the cutting face S or the hobbing tool is made suitable for machining face gears which can interact with a helically toothed pinion.

A line p₂ intersects the cutting face S₂ at the position of a central point 14 of the cutting edge 9 of the hob teeth group 2, which central point 14 corresponds to the central point of the pinion which interacts with the face gear. The line p₂ makes an angle αₖₒₚ with the line which is perpendicular to the radius vector to the axis of rotation 6 and therefore runs parallel to the clearance face V. A line p₃ corresponds to the line p₂ but intersects the cutting face S₃ at the position of a central point 15 of the cutting edge 9 of the hob teeth group 3.

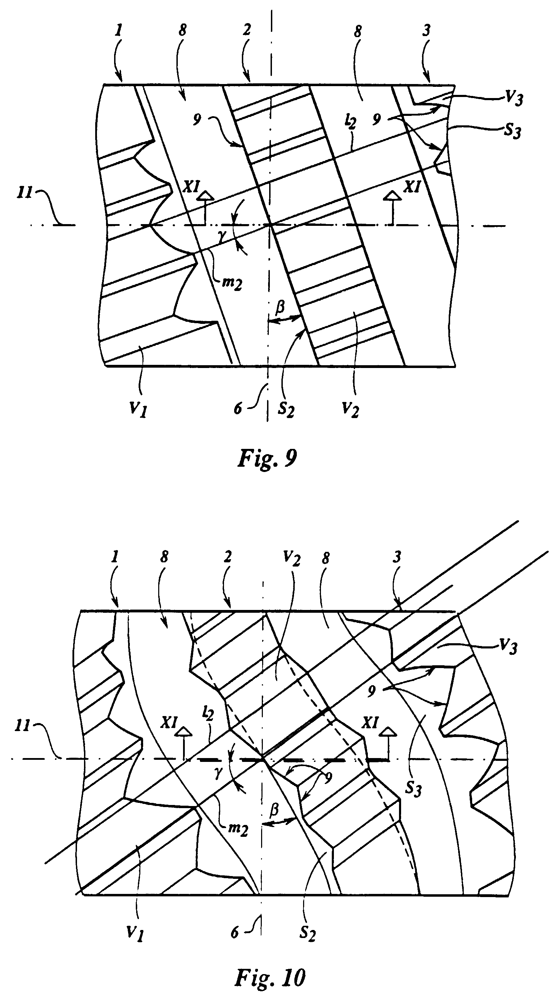

As a departure from the exemplary embodiment shown in Figure 2, it is also possible, for example in cases where the lip angle γ is given a high value, for the cutting face S not to be perpendicular to the central plane 11 but to be, for example, perpendicular to the direction A. This can have the result that the cutting face becomes helical in a known manner, as is discussed in greater detail below by reference to Figures 9, 10 and 11.

As will be clear, the shape of the cutting edge 9 remains the same after grinding the cutting face S if the ground cutting face runs parallel to the old cutting face. Since the axis of rotation 6 is then no longer situated in the cutting face S, the shape of the face gear made with the hobbing tool alters and acquires deviations from the theoretically correct shape. If the cutting face S is ground in such a way that the axis of rotation 6 forms a part thereof, the shape of the cutting edge 9 alters. The deviation is reduced by optimizing the direction in which the cutting face S is ground.

Depending, inter alia, on the shape of the desired profile of the cutting edge 9, the number of teeth groups nₛₜₒₗ, the clearance angle αₖₒₚ and the diameter D_{fr}, the generatrices of the clearance face of the hob teeth group 2, such as, for example, the first line L₂ and the second line m₂, may intersect the downstream hob teeth group 3. If the clearance faces V of the hob cutter 4 are then machined with a tool which machines according to an appropriate straight generatrix, such as is the case, for example, with wire spark erosion of the clearance faces, then both hob teeth groups 2 and 3 are machined simultaneously. This is undesirable because the accuracy of the final machining is disadvantageously influenced thereby or because the cutting edge 9 of the downstream hob teeth group is partly removed.

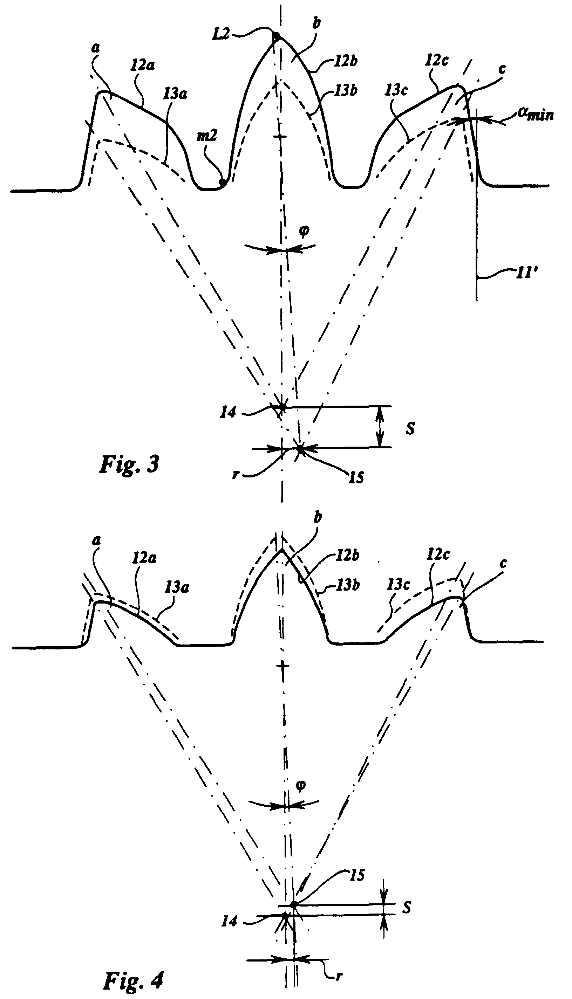

Figures 3 and 4 explain how this undesirable situation arises and how it can be prevented.

Figure 3 shows the view A of hob teeth group 2 from Figure 1, a continuous line 12 corresponding to the cutting edge 9 of the hob teeth group 2 and a broken line 13 corresponding to the cutting edge 9 of the downstream hob teeth group 3.

The profile comprising the teeth a, b and c of the hob teeth group 3 is derived from the same pinion as that from which the profile of the hob teeth group 2 is derived. Under these circumstances, the pinion is always rotated by an angle ϕ about its central point during the transition between the consecutive teeth groups, the magnitude of ϕ being such that, for every complete rotation of the hob cutter 4 about its axis of rotation 6, the pinion is rotated by one tooth (in the case of a single-thread cutter) or by a plurality of teeth (in the case of a multithread cutter).

In Figure 3, hob teeth group 2 is shown in viewing direction A, and the teeth a, b and c of the hob teeth group 3 lying in another plane situated downstream are both rotated and displaced in said viewing direction with respect to those of hob teeth group 2. This displacement is dependent on the number of teeth groups nₛₜₒₗ and the diameter of the cutter D_{fr}. An apparent horizontal displacement r due to the viewing direction is, in addition, dependent on the lead angle γ and an apparent vertical displacement s due to the viewing direction is dependent on the clearance angle αₖₒₚ.

In the situation shown in Figure 3, the generatrices which are perpendicular to the plane of the drawing and which together form the clearance face V, including, for example, also the lines L₂ and m₂, remain outside the downstream hob teeth group 3 indicated by the broken line 13.

The cutting edge 9 is preferably so designed that the teeth become increasingly wider towards the centre of the cutter. This is achieved by ensuring in a known manner that a minimum pressure angle αₘᵢₙ between the cutting edge 9 and a plane 11' which is perpendicular to the axis of rotation 6 (not shown in Figure 3) does not become less than a certain value. Because the root of the tooth has a large width, there is more play with the teeth on the subsequent hob teeth group in the critical region at the root of the teeth a, b and c.

Figure 4 shows a view corresponding to Figure 3 in which an undesirable situation has arisen as a result of the fact that, for example, the diameter D_{fr}, of the cutter has been made unduly small, as a result of the fact that the number of hob teeth groups nₛₜₒₗ is too great or as a result of the fact that the clearance angle αₖₒₚ is too large. The view in the direction of the generatrices of the clearance face reveals that the downstream hob teeth group projects through the clearance face extended in the direction of the generatrices.

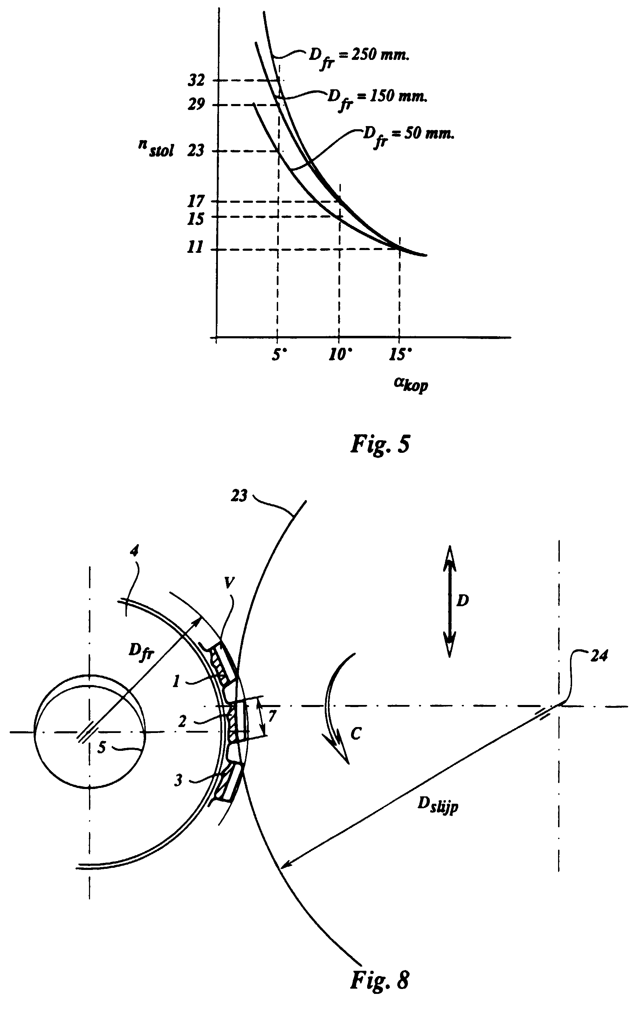

Figure 5 shows in a graph for a certain profile the influence of the diameter D_{fr}, the clearance angle αₖₒₚ and the number nₛₜₒₗ of hob teeth groups, the minimum pressure angle αₘᵢₙ being 15°, the number of teeth of the pinion interacting with the face gear being 12 and the module of the pinion m being 3 mm. The lines drawn in the graph give the maximum permissible number of teeth groups in a single-thread cutter, the generatrices of the clearance face, which always remain free of the downstream hob teeth group being straight.

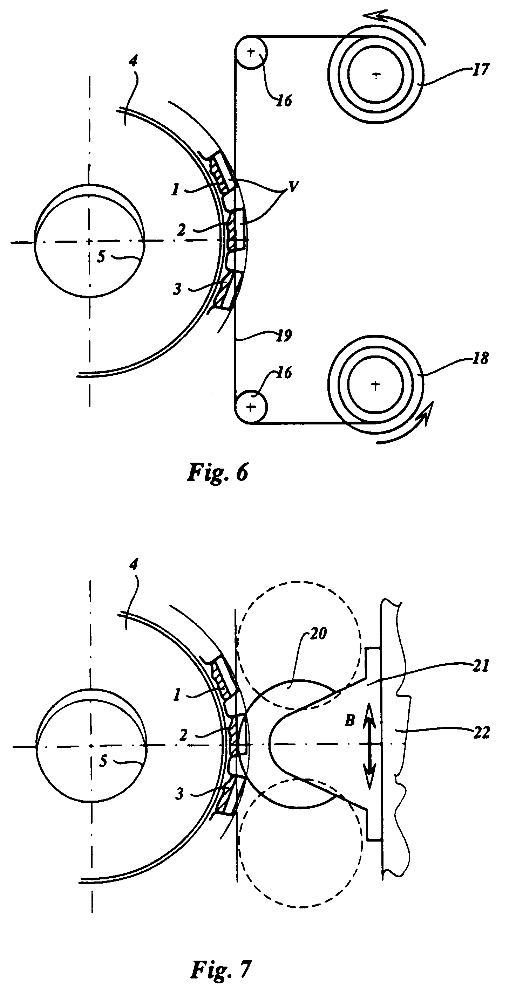

Figure 6 shows the machining of the clearance face V by means of wire spark erosion. In this arrangement, the hob cutter 4 is placed at the lead angle γ on a bed, which is not shown and which is moved with respect to a spark-erosion wire 19, the material of the hob cutter 4 being removed in a known manner by means of spark-erosion metal removal. During the spark erosion, the spark-erosion wire 19 runs over guide rollers 16 from a reel 17 to a reel 18.

Correct dimensioning ensures that always only one hob teeth group is machined during the final machining and that the spark-erosion wire 19 always maintains adequate spacing, for example at least 0.03 mm, from the subsequent hob teeth group 3 during the machining of, for example, hob teeth group 2. As a result of this, the spark-erosion wire 19 is uniformly loaded and a high accuracy and quality of the surface are achieved.

Figure 7 shows a final machining of the hob cutter 4 in which the clearance face V is machined by a relatively small abrasive wheel 20. The abrasive wheel 20 is mounted in a carriage 21 which moves to and fro in a direction B along a frame 22. The hob cutter 4, which is placed at the lead angle γ with respect to the direction of movement B of the abrasive wheel, is moved with respect to the frame 22 in such a way that the rectilinear track of the metal-removing surface of the abrasive wheel 20 is moved in accordance with the generatrices along the clearance face V of the hob teeth groups and, as a result, grinds the desired profile in the teeth group.

Figure 8 shows a final machining of the hob cutter 4 in which the clearance face V is machined by a large abrasive wheel 23 having an axis of rotation 24 and a diameter Dₛₗᵢⱼₚ which is substantially greater than the diameter D_{fr} of the hob cutter 4. The larger diameter of the abrasive wheel makes a high grinding speed C possible and the machining process can be relatively fast. In this machining procedure, the central point 24 can be moved in a direction D which corresponds to the direction of the generatrices, as a result of which the generatrices of the clearance face V are straight.

In another procedure for machining the hob cutter 4, the central point 24 is stationary in the direction D. As a result of the fact that the diameter Dₛₗᵢⱼₚ of the abrasive wheel 23 is large, the straight line of the generatrix is approximated. As a result of the fact that the machining time is shorter due to the lack of the oscillating movement in the direction D, the hob cutter 4 can be cheaper. It is also possible to provide a plurality of hob teeth groups on a cutter of the same diameter, which may increase the metal-removing capacity of the cutter.

Obviously, the machining operations with the abrasive wheels have to be performed with grinding materials whose diameter is more or less constant during the machining of the entire hob cutter or there must be a provision in the processing machine for automatic correction. Preferably, use is made in this connection of diamond-impregnated steel abrasive wheels.

Figure 9 shows the view of a hob cutter which corresponds to Figure 2 and in which the cutting face S is designed as a flat face which, at the position of the centre plane, makes a slope angle β with the axis of rotation 6 of the hob cutter. The radius vector from the cutting edge 9 to the axis of rotation 6 is situated only in the plane 11 in the cutting face S. It follows from this that the lead angle γ, which is formed by the angle between the plane including the radius vector from the cutting edge 9 to the axis of rotation 6 and the generatrices L and m, is not constant. For smaller values of the slope angle β, any deviations which occur do not, however, give rise to large deviations and are acceptable.

Figure 10 shows the view of a hob cutter which corresponds to Figure 2 and in which the cutting face S is designed as a helical surface, the radius vector from the axis of rotation 6 to the cutting edge 9 always being situated in the cutting face S. Such helical cutting faces S are known and can optionally also be designed so that the cutting face S is formed by lines which cross the axis of rotation 6 perpendicularly at a constant spacing instead of intersecting it. The slope angle β is identical for all the positions of the cutting face, as a result of which the cutting properties of the hob cutter also improve.

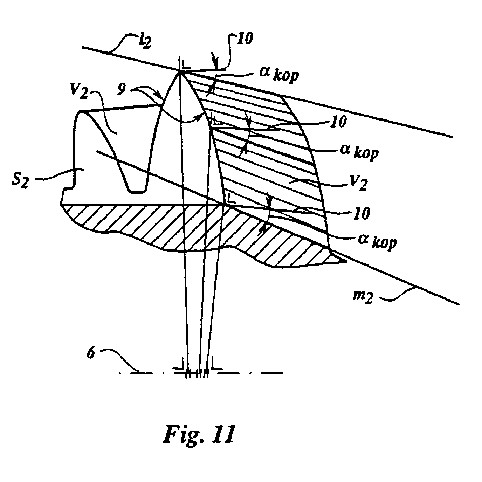

Figure 11 shows a portion of a hob teeth group corresponding to the section along the line XI-XI in Figures 9 and 10. This figure shows the embodiment in which the clearance angle αₖₒₚ is kept constant over the different diameters of the cutter. As a result, the generatrices no longer always run in the same direction. As a result of rotating the hob cutter during the machining, it is nevertheless possible for the generatrices always to occupy one and the same position with respect to the axis of rotation 6, which contributes to the simplicity of making the hob cutter and the costs thereof.

## Claims

1. Method for machining a clearance face (V) of a hob teeth group (1,2,3,...) of a hob cutter (4) for machining face gears, the hob teeth group being provided on the circumference of a disc-like hob cutter body having an axis of rotation (6), the clearance face (V) intersecting a cutting face (S) of the hob teeth group thereby forming a cutting edge (9) giving the hob cutter a lead angle (γ), the clearance face (V) being machined by moving a machining tool along the outer surface of the hob teeth group, **characterised in that** the machining tool (19,20,23) is moved along the outer surface of the hob teeth group such that the clearance face (V) is machined along parallel lines, said lines being parallel to a plane making an angle with a plane perpendicular to the axis of rotation (6) which is equal to the lead angle (γ) of the hob cutter.

2. Method according to claim 1, wherein during machining of a hob teeth group the cutter body is rotated around its axis of rotation (6).

3. Method according to claim 1 or 2, wherein the machining tool is the wire of a wire spark-erosion installation.

4. Method according to claim 1 or 2, wherein the machining tool is an abrasive wheel making oscillating rectilinear movements with respect to the cutter body.

5. Method according to claim 1 or 2, wherein the machining tool is an abrasive wheel moving in a plane which is stationary to the hob cutter in a direction transverse to the parallel lines.

## Patentansprüche

1. Verfahren zum Bearbeiten einer Freifläche (V) einer Abwälzzahngruppe (1,2,3...) eines Abwälzfräsers (4) zur Bearbeitung von Stirnzahnrädern, wobei die Abwälzzahngruppe auf dem Umfang eines scheibenartigen Abwälzfräserkörpers vorgesehen ist, der eine Drehachse (6) aufweist, wobei die Freifläche (V) eine Spanfläche (S) der Abwälzzahngruppe schneidet, wodurch eine Schneidkante (9) gebildet wird, was dem Abwälzfräser einen Steigungswinkel (γ) verleiht, wobei die Freifläche (V) bearbeitet wird, indem ein Bearbeitungswerkzeug an der äußeren Oberfläche der Abwälzzahngruppe entlang bewegt wird, **dadurch gekennzeichnet, dass** das Bearbeitungswerkzeug (19,20,23) derart an der äußeren Oberfläche der Abwälzzahngruppe entlang bewegt wird, dass die Freifläche (V) entlang von parallelen Linien bearbeitet wird, wobei die besagten Linien parallel zu einer Ebene sind, die einen Winkel mit einer zur Drehachse (6) senkrechten Ebene einschließt, der gleich dem Steigungswinkel (γ) des Abwälzfräsers ist.

2. Verfahren nach Anspruch 1, bei dem während der Bearbeitung einer Abwälzzahngruppe der Fräserkörper um seine Drehachse (6) gedreht wird.

3. Verfahren nach Anspruch 1 oder 2, bei dem das Bearbeitungswerkzeug der Draht einer Draht-Funkenerosionseinrichtung ist.

4. Verfahren nach Anspruch 1 oder 2, bei dem das Bearbeitungswerkzeug ein Schleifrad ist, das in Bezug zum Fräserkörper geradlinige Hin- und Herbewegungen durchführt.

5. Verfahren nach Anspruch 1 oder 2, bei dem das Bearbeitungswerkzeug ein Schleifrad ist, das sich in einer Ebene bewegt, die in einer Richtung quer zu den parallelen Linien stationär zum Abwälzfräser ist.

## Revendications

1. Procédé pour usiner une face de dégagement (V) d'un groupe (1, 2, 3, ...) de dents d'une fraise-mère (4) pour usiner des pignons de chant, le groupe de dents de la fraise-mère étant prévu sur la circonférence d'un corps en forme de disque de la fraise-mère possédant un axe de rotation (6), la face de dégagement (V) recoupant une face de coupe (S) du groupe de dents de la fraise-mère en formant de ce fait un bord de coupe (9) conférant à la fraise-mère un angle d'attaque (γ), la face de dégagement (V) étant usinée par déplacement d'un outil d'usinage le long de la surface extérieure du groupe de dents de la fraise-mère, caractérisé en ce que l'outil d'usinage (19, 20, 23) est déplacé le long de la surface extérieure du groupe de dents de la fraise-mère de telle sorte que la face de dégagement (V) est usinée le long de lignes parallèles, lesdites lignes étant parallèles à un plan faisant, par rapport à un plan perpendiculaire à l'axe de rotation (6), un angle qui est égal à l'angle d'attaque (γ) de la fraise-mère.

2. Procédé selon la revendication 1, selon lequel pendant l'usinage d'un groupe de dents de la fraise-mère, le corps de la fraise-mère tourne autour de son axe de rotation (6).

3. Procédé selon la revendication 1 ou 2, selon lequel l'outil d'usinage est le fil d'une installation d'usinage par étincelage à fil.

4. Procédé selon la revendication 1 ou 2, selon lequel l'outil d'usinage est une meule qui exécute des déplacements rectilignes oscillatoires par rapport au corps de la fraise-mère.

5. Procédé selon la revendication 1 ou 2, selon lequel l'outil d'usinage est une meule se déplaçant dans un plan qui est fixe par rapport à la fraise-mère, dans une direction transversale par rapport aux lignes parallèles.
